# DEMANDE DE BREVET EUROPEEN

(11) **EP 4 715 438 A1**
(43) Date de publication de la demande: **25.03.2026**
(21) Numéro de dépôt: 25202087.0
(22) Date de dépôt: 15.09.2025
(51) Int. Cl.: G02B 6/54, G02B 6/46, H02G 1/08

(54) **CHAUSSETTE DE TIRAGE POUR CABLE DE TELECOMMUNICATIONS**

(30) Priorité: 19.09.2024 EP 24315429; 26.12.2024 FR 2415281
(71) Demandeur: Telenco, 38430 Moirans (FR)
(72) Inventeur: STRUB, Romain, 38430 MOIRANS (FR)
(74) Mandataire: Cabinet Beaumont

(57) **Abrégé**

La présente description concerne une chaussette de tirage (100) pour câble de télécommunications (101), comprenant un tube prédécoupé (113) pour pelage et un filin de tirage (115) ; un dispositif comprenant une telle chaussette de tirage et un câble optique (101) ; un point de branchement ou de terminaison optique comprenant un tel dispositif et un procédé de tirage d'un câble de télécommunication au moyen d'une chaussette de tirage.

## Description

### Domaine technique

La présente description concerne de façon générale les installations de télécommunications, et plus particulièrement les dispositifs et procédés permettant le tirage de câbles de télécommunications tels que des câbles optiques comprenant au moins une fibre optique.

### Technique antérieure

Divers dispositifs et procédés de tirage de câbles ont été proposés. L'expression « tirage de câble » désigne des opérations destinées à permettre la pose, ou l'installation, d'un câble en exerçant une force de traction sur l'une de ses extrémités, typiquement afin d'insérer le câble dans une gaine de protection, un tube, un chemin de câble, etc. Parmi les dispositifs et procédés de tirage de câbles existants, la mise en œuvre de chaussettes de tirage, ou « tire-câbles », a été proposée. On connaît notamment des chaussettes de tirage comprenant une gaine en maille ou résille, le maillage étant par exemple réalisé à partir de fils en un matériau métallique ou plastique.

Toutefois, les dispositifs et procédés existants de tirage de câbles, notamment de câbles optiques, souffrent de divers inconvénients. Les chaussettes de tirage existantes ne donnent en particulier pas satisfaction car elles requièrent l'utilisation d'un outillage, par exemple un outil de découpe, pour permettre leur retrait après tirage du câble. Cela rend l'opération de tirage du câble plus longue, plus complexe et moins sûre dans la mesure où la découpe de la chaussette peut conduire à endommager le câble. Par ailleurs, le recours à des chaussettes de tirage en gaine maillée présente divers inconvénients, notamment du fait qu'un ou plusieurs connecteurs fixés en bout de câble sont susceptibles de se bloquer dans les mailles, voire d'être détériorés. En outre, des éléments indésirables peuvent pénétrer à l'intérieur de la chaussette de tirage, en passant entre les mailles.

### Résumé de l'invention

Il existe un besoin de pallier tout ou partie des inconvénients des dispositifs et procédés existants de tirage de câbles. Il serait en particulier souhaitable d'améliorer les chaussettes de tirage pour câbles de télécommunications, notamment pour câbles optiques, existantes.

Il existe plus particulièrement un besoin pour une chaussette de tirage pour câble optique dont le retrait, après tirage du câble, ne requiert l'utilisation d'aucun outil de découpe, ou outil coupant.

Pour cela, un mode de réalisation prévoit une chaussette de tirage pour câble de télécommunications, comprenant :
- un tube prédécoupé pour pelage ; et
- un filin de tirage.

Selon un mode de réalisation, le filin de tirage est constitué d'un ensemble de fils, de préférence en aramide, d'armure du câble de télécommunications.

Selon un mode de réalisation, le filin de tirage est constitué d'un ensemble de fils, de préférence en aramide, indépendants du câble de télécommunications.

Selon un mode de réalisation, le tube prédécoupé est un manchon de gaine thermorétractable.

Selon un mode de réalisation, le manchon de gaine thermorétractable présente un coefficient de rétreint compris dans une plage allant de 2:1 à 6:1, de préférence dans une plage allant de 2:1 à 4:1, plus préférentiellement égal à environ 2:1 ou à 3:1.

Selon un mode de réalisation, le tube prédécoupé comprend au moins une ligne de prédécoupe comprenant une pluralité de trous traversant chacun toute l'épaisseur du tube prédécoupé.

Selon un mode de réalisation, le tube prédécoupé présente une forme cylindrique de section circulaire.

Selon un mode de réalisation, chaque ligne de prédécoupe s'étend le long d'une génératrice du cylindre formé par le tube prédécoupé.

Selon un mode de réalisation, le tube prédécoupé présente une longueur comprise entre environ 100 mm et environ 600 mm, par exemple égale à environ 500 mm.

Selon un mode de réalisation, le tube prédécoupé présente une résistance à la traction de l'ordre de plusieurs dizaines de newtons, de préférence comprise entre environ 80°N et environ 250 N.

Un mode de réalisation prévoit un dispositif comprenant :
- un câble optique comprenant au moins une fibre optique ; et
- une chaussette de tirage telle que décrite, située à une extrémité du câble optique.

Selon un mode de réalisation, le câble optique comprend plusieurs fibres optiques, la chaussette de tirage enserrant des connecteurs situés respectivement aux extrémités des fibres optiques, l'ensemble de fils d'armure du câble s'étendant hors d'une gaine du câble optique et ladite gaine.

Selon un mode de réalisation, le câble optique comprend une seule fibre optique, la chaussette de tirage enserrant un connecteur situé à l'extrémité de la fibre optique et l'ensemble de fils d'armure situé en vis-à-vis du connecteur.

Un mode de réalisation prévoit un point de branchement optique comprenant :
- un dispositif tel que décrit ;
- une embase ;
- une bobine d'enroulement du câble optique montée à rotation par rapport à l'embase ; et
- un couvercle de protection.

Un mode de réalisation prévoit un point de terminaison optique comprenant :
- un dispositif tel que décrit ;
- une embase ;
- une bobine d'enroulement du câble optique montée à rotation par rapport à l'embase ; et
- un couvercle de protection.

Un mode de réalisation prévoit un procédé de tirage d'un câble de télécommunications au moyen d'une chaussette de tirage telle que décrite, le procédé comprenant les étapes suivantes :
a) insertion du tube prédécoupé autour d'une extrémité du câble ;
b) fixation mécanique du tube prédécoupé au câble ;
c) après tirage du câble, retrait du tube prédécoupé par pelage.

Selon un mode de réalisation, à l'étape c), le retrait du tube prédécoupé est réalisé manuellement, sans outil de découpe.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1A et la figure 1B sont des vues schématiques et partielles illustrant des étapes successives d'un procédé de mise en œuvre d'une chaussette de tirage d'un câble optique selon un mode de réalisation ;

la figure 2A et la figure 2B sont des vues schématiques et partielles illustrant des étapes successives d'un procédé de mise en œuvre d'une chaussette de tirage d'un câble optique selon un mode de réalisation ;

la figure 3A et la figure 3B sont des vues schématiques et partielles illustrant des étapes successives d'une variante de mise en œuvre de la chaussette de tirage des figures 2A et 2B ;

la figure 4 est une vue schématique et partielle d'un exemple de tube prédécoupé d'une chaussette de tirage d'un câble de télécommunications selon un mode de réalisation ;

la figure 5 est une vue en perspective, schématique et partielle, illustrant un exemple de point de terminaison optique comprenant une chaussette de tirage selon un mode de réalisation ; et

la figure 6 est une vue en perspective, schématique et partielle, illustrant un exemple de point de branchement optique comprenant une chaussette de tirage selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différentes applications des câbles optiques, des points de terminaison optique et des points de branchement optique de la présente description n'ont pas été détaillées, les modes de réalisation décrits étant compatibles avec toutes ou la plupart des applications usuelles mettant en œuvre des câbles optiques, des points de terminaison optique et des points de branchement optique, moyennant éventuellement des adaptations à la portée de la personne du métier à la lecture de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas **»,** « gauche **»,** « droite **»,** etc., ou relative, tels que les termes « dessus **»,** « dessous **»,** « supérieur **»,** « inférieur **»,** etc., ou à des qualificatifs **d'orientation,** tels que les termes « horizontal **»,** « vertical **»,** etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Un des objectifs visés par les modes de réalisation décrits est de faciliter le tirage, par un opérateur, d'un câble de télécommunications, par exemple un câble optique comprenant au moins une fibre optique. Un mode de réalisation vise plus particulièrement à réduire le nombre, la durée et la difficulté des opérations associées au tirage de câbles. Un mode de réalisation vise en outre à limiter les risques d'endommagement du câble et de blessure de l'opérateur pendant ces opérations.

Après utilisation d'une chaussette de tirage de câble ayant permis le tirage, la pose ou l'installation, d'un câble dans une gaine de protection, un tube, un chemin de câble, etc., la chaussette de tirage est retirée du câble, c'est-à-dire que la chaussette est désolidarisée du câble, par un opérateur, généralement au moyen d'un outil de découpe comprenant au moins une lame, par exemple un outil de type paire de ciseaux ou « cutter **».** Cette opération est délicate car, si l'opérateur maîtrise mal son geste, la lame peut blesser l'opérateur ou venir entailler le câble et le fragiliser, voire le rendre inutilisable.

Selon les modes de réalisation décrits, il est prévu une chaussette de tirage dont le retrait après tirage du câble ne requiert l'utilisation d'aucun outil, en particulier aucun outil coupant.

Afin d'éviter toute opération de découpe au moyen d'un outil lors du retrait de la chaussette de tirage, les modes de réalisation décrits prévoient l'utilisation d'un tube prédécoupé, par exemple un tronçon, ou manchon, de gaine prédécoupée. Avant l'opération de tirage, une extrémité du câble depuis laquelle l'opérateur souhaite réaliser le tirage est insérée dans le tube prédécoupé. Le câble comporte par exemple, à cette extrémité, un ou plusieurs connecteurs. Dans le cas d'un câble optique comprenant une ou plusieurs fibres optiques, par exemple un fouet de fibres optiques, un connecteur, ou fiche, de type « LC » est par exemple situé à l'extrémité de chaque fibre optique.

Le ou les connecteurs sont placés à l'intérieur du tube prédécoupé. Selon un mode de réalisation, le tube prédécoupé est un tronçon de gaine thermorétractable. Dans ce cas, la chaussette de tirage est ensuite chauffée, par exemple à l'aide d'un pistolet à air chaud, d'une flamme par exemple d'un briquet, etc., pour provoquer un rétreint de la gaine thermorétractable, c'est-à-dire une diminution de son diamètre dans le cas d'une gaine cylindrique de section sensiblement circulaire. La gaine thermorétractable vient ainsi épouser la forme de l'extrémité du câble à tirer. La gaine thermorétractable vient par exemple plus précisément enserrer la gaine du câble, la ou les extrémités de la ou des fibres optiques, et le ou les connecteurs.

Le câble est ensuite tiré, par exemple en utilisant directement la chaussette de tirage ou en utilisant une aiguille de tirage fixée temporairement à la chaussette de tirage, puis la chaussette de tirage est retirée par « pelage », par exemple par ouverture du tube prédécoupé le long d'au moins une ligne de prédécoupe. L'opération de retrait du tube prédécoupé après tirage du câble est réalisée manuellement par l'opérateur et sans utiliser d'outil, en particulier en n'utilisant aucun outil coupant. Le retrait de la chaussette de tirage est ainsi grandement facilité et les risques d'endommagement du câble optique ou de blessure de l'opérateur sont fortement réduits.

Dans le cas d'une gaine thermorétractable, les dimensions externes et le rétreint du manchon de gaine thermorétractable sont par exemple choisis de sorte à pouvoir insérer facilement l'extrémité du câble à tirer dans le manchon, avant rétractation, et de sorte à pouvoir enserrer une partie non dénudée du câble et le ou les connecteurs se trouvant à l'extrémité de la ou des fibres optiques. Pour cela, le manchon de gaine thermorétractable de la chaussette de tirage présente par exemple un coefficient de rétreint, c'est-à-dire un rapport entre un diamètre du manchon avant chauffage et un diamètre minimal du manchon après chauffage, compris dans une plage allant de 2:1 à 6:1, par exemple dans une plage allant de 2:1 à 4:1, par exemple égal à environ 2:1 ou à 3:1. À titre d'exemple, dans un cas où les fiches forment un ensemble présentant des dimensions externes supérieures, par exemple environ trois fois supérieures, à celles du câble optique, un coefficient de rétreint égal à environ 3:1 est choisi.

À titre de variante ou de complément, le tube prédécoupé peut être maintenu solidaire mécaniquement du câble optique par un ou plusieurs moyens mécaniques, par exemple un ou plusieurs colliers de serrage.

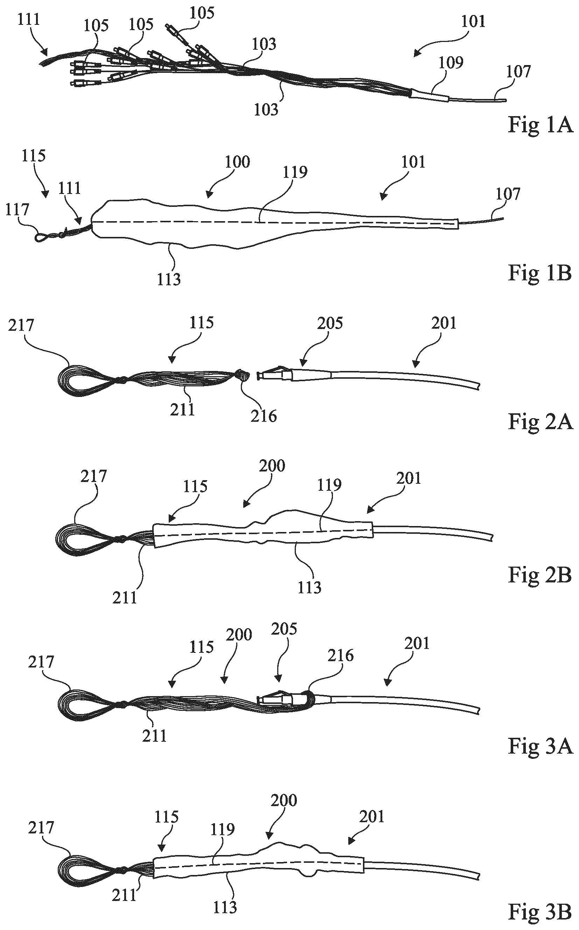

la figure 1A et la figure 1B sont des vues schématiques et partielles illustrant des étapes successives d'un procédé de mise en œuvre d'une chaussette de tirage 100 d'un câble optique 101 selon un mode de réalisation.

Dans l'exemple illustré, le câble optique 101 comprend une ou plusieurs fibres optiques 103 (douze fibres optique 103, dans l'exemple représenté) équipées chacune d'un connecteur 105, par exemple un connecteur ou une fiche de type « LC ». Le câble optique 101 est dit « pré-connectorisé ». À titre d'exemple, le câble optique 101 est d'abord dénudé par retrait d'une partie d'une gaine 107 entourant les fibres optiques 103, par exemple sur une longueur égale à environ 400 mm, puis les connecteurs 105 sont fixés aux extrémités des fibres optiques 103.

Dans l'exemple représenté, les fibres optiques 103 du câble optique 101 présentent des longueurs différentes. Cela permet avantageusement d'étager la position des connecteurs 105. Dans l'exemple illustré où le câble optique 101 comporte douze fibres optiques 103, les connecteurs 105 sont regroupés en quatre groupes de trois connecteurs 105. Le câble optique 101 présente par exemple un encombrement maximal, ou enveloppe externe, compris entre 20 et 25 mm. Cela correspond par exemple sensiblement au diamètre d'un cercle dans lequel sont inscrits trois connecteurs 105 du câble optique 101.

À titre de variante, les fibres optiques 103 peuvent présenter une même longueur, aux dispersions de fabrication près. Cela correspond par exemple à un cas dans lequel le câble optique 101 comporte un nombre de fibres optiques 103, donc un nombre de connecteurs 105, inférieur ou égal à quatre, de préférence inférieur ou égal à trois.

Dans l'exemple représenté, un manchon 109 de gaine thermorétractable enserre les fibres optiques 103 et la gaine 107 au voisinage de l'extrémité de la gaine 107 depuis laquelle les fibres optiques 103 s'épanouissent. Le manchon 109 permet par exemple d'éviter d'endommager l'extrémité de la gaine 107 pendant la manipulation du câble optique 101. À titre de variante, le manchon 109 peut être omis.

Dans l'exemple représenté, le câble optique 101 comprend un ensemble de fils 111 en un matériau résistant à la traction, par exemple des fils d'armure en aramide, conférant au câble 101 une bonne résistance à la traction. Les fils d'aramide 111 sont par exemple mis à nu par dénudage de l'extrémité de la gaine 107 du câble optique 101.

Selon un mode de réalisation, la chaussette de tirage 100 comprend un tube prédécoupé 113 et un filin de tirage 115. Dans l'exemple représenté, le filin de tirage 115 est constitué par les fils 111 d'armure, par exemple en aramide, du câble optique 101. Les fils 111 sont par exemple noués de sorte à former une boucle 117 permettant, après mise en place du tube prédécoupé 113 de la chaussette de tirage 100, d'exercer sur le câble optique 101 une force de traction permettant de tirer le câble pré-connectorisé 101, par exemple pour le faire passer dans une gaine de protection.

La partie non dénudée du câble optique 101 présente par exemple une section sensiblement circulaire dont le diamètre est de l'ordre de 3 mm.

Dans l'exemple représenté, le tube prédécoupé 113 de la chaussette de tirage 100 est constitué par un tronçon de gaine thermorétractable prédécoupée épousant la forme du groupe de connecteurs 105 situés aux extrémités des fibres optiques 103 individuelles. Cela permet de faciliter le tirage du câble optique 101, par exemple dans une gaine, en évitant que les fiches 105 ne se bloquent ou ne soient endommagées lors du tirage. Le tronçon de gaine thermorétractable 113 présente une prédécoupe 119 en forme de pointillé s'étendant le long d'une direction longitudinale du tronçon 113. Bien qu'une seule ligne de prédécoupe 119 soit visible en figure 1B, le tronçon de gaine thermorétractable 113 peut comprendre un nombre quelconque de lignes de prédécoupe 119 pour faciliter son retrait après tirage du câble optique 101.

À titre de variante ou de complément, un ou plusieurs éléments de maintien mécanique du tube prédécoupé 113 autour de la gaine 107, des fibres optiques 103 et des connecteurs 105 du câble optique 101, peuvent être prévus. Cela correspond par exemple à une variante dans laquelle le tube prédécoupé n'est pas thermorétractable. À titre d'exemple, chaque élément de maintien mécanique est un collier de serrage, par exemple en polyamide ou en plastique, par exemple connu sous la dénomination commerciale « rilsan ».

Selon l'application, le câble optique 101 peut être tiré en exerçant une force de traction directement sur la boucle 117 ou en utilisant une aiguille de tirage fixée mécaniquement à la boucle 117. L'aiguille de tirage permet par exemple d'installer le câble optique 101 dans des gaines plus longues qu'en utilisant la chaussette de tirage 100 seule.

La figure 2A et la figure 2B sont des vues schématiques et partielles illustrant des étapes successives d'un procédé de mise en œuvre d'une chaussette de tirage 200 d'un câble optique 201 selon un mode de réalisation.

Le câble optique 201 des figures 2A et 2B diffère du câble optique 101 des figures 1A et 1B en ce que le câble optique 201 est « mono-fibre », c'est-à-dire qu'il comporte une seule fibre optique 103 (non visible en figures 2A et 2B) dont une extrémité est équipée d'un connecteur 205, par exemple un connecteur ou une fiche LC. Dans cet exemple, l'armure en aramide du câble optique 201 ne s'étend pas hors de la gaine 107.

La chaussette de tirage 200 est par exemple analogue à la chaussette de tirage 100. Dans l'exemple représenté, la chaussette de tirage 200 comprend le tube prédécoupé 113 et diffère de la chaussette de tirage 100 en ce que le filin de tirage 115 de la chaussette de tirage 200 comprend un ensemble de fils 211, par exemple en aramide, indépendants du câble optique 201. Dans l'exemple représenté, une extrémité 216 des fils 211 est nouée et destinée à être placée en vis-à-vis du connecteur 205 et une autre extrémité 217 forme une boucle destinée à être placée hors du tube prédécoupé 113 de la chaussette de tirage 200 pour permettre le tirage du câble optique 201. Le nœud formé côté connecteur 205 est destiné à être enserré par le tube prédécoupé 113, par exemple après rétreint par exposition à une source de chaleur, par exemple provenant d'un pistolet à air chaud, d'une flamme par exemple d'un briquet, etc., dans le cas où le tube prédécoupé 113 est un tronçon de gaine thermorétractable.

La figure 3A et la figure 3B sont des vues schématiques et partielles illustrant des étapes successives d'une variante de mise en œuvre de la chaussette de tirage 200 des figures 2A et 2B.

La variante des figures 3A et 3B diffère du mode de réalisation des figures 2A et 2B en ce que, dans la variante des figures 3A et 3B, l'extrémité 216 de l'ensemble de fils 211 est nouée autour du connecteur 205 du câble optique 201. À titre d'exemple, le nœud utilisé est un nœud de cabestan, un nœud de chaise, etc. ou, plus généralement, tout type de nœud adapté à exercer une traction sur le connecteur 205.

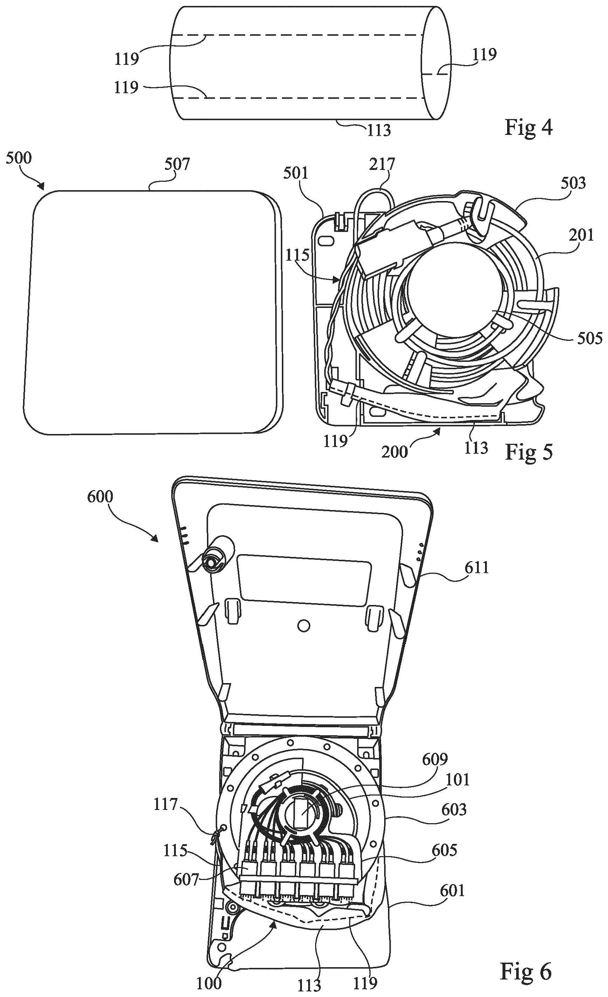

La figure 4 est une vue schématique et partielle du tube prédécoupé 113 de la chaussette de tirage 100 ou 200 selon un mode de réalisation.

Dans l'exemple illustré, le tube prédécoupé 113 présente une forme cylindrique de section sensiblement circulaire. Le tube prédécoupé 113 présente par exemple trois lignes de découpe 119 longitudinales sensiblement parallèles entre elles. Chaque ligne de prédécoupe 119 comprend une pluralité de trous traversant chacun toute l'épaisseur du tube prédécoupé 113 séparés les uns des autres par des parties de tube prédécoupé 113 non découpées. Les lignes de prédécoupe 119 sont adaptées à résister aux efforts exercés sur le tube prédécoupé 113 lors du serrage autour du câble optique 101 ou 201, par exemple lors du rétreint par chauffage dans le cas où le tube 113 est un tronçon de gaine thermorétractable, et lors du tirage du câble. Les lignes de prédécoupe 119 sont en outre adaptées à céder par arrachement manuel, sans recourir à l'usage d'un outil coupant, de parties du tube prédécoupé 113 situées entre les lignes de prédécoupe 119. Chaque ligne de prédécoupe 119 s'étend par exemple sensiblement le long d'une génératrice du cylindre formé par le tube prédécoupé 113. Le tube prédécoupé 113 comprend par exemple au moins une et au plus quatre lignes de prédécoupe 119. Cet exemple n'est toutefois pas limitatif, le tube prédécoupé 113 pouvant plus généralement comprendre au moins une ligne de prédécoupe 119.

Le tube prédécoupé 113 présente par exemple une longueur comprise entre environ 100 mm et environ 600 mm, par exemple égale à environ 500 mm. Le tube prédécoupé 113 présente par exemple en outre une résistance à la traction de l'ordre d'une ou plusieurs dizaines, voire centaines de newtons, par exemple entre environ 80°N et environ 250N N.

La figure 5 est une vue en perspective, schématique et partielle, illustrant un exemple de point de terminaison optique (PTO) 500 comprenant la chaussette de tirage 200 selon un mode de réalisation.

Dans l'exemple représenté, le point de terminaison optique 500 comprend :
- une embase 501 ;
- une bobine 503 montée à rotation par rapport à l'embase 501 et sur laquelle est enroulé un câble optique, par exemple le câble optique 201 ;
- un bouton 505 de blocage de la position angulaire de la bobine 503 par rapport à l'embase 501 ; et
- un couvercle 507, ou capot.

Dans l'exemple représenté, le tube prédécoupé 113 et le filin de tirage 115 de la chaussette de tirage 200 sont disposés à l'intérieur du point de terminaison optique 500 avant pose et raccordement du câble optique 201. La boucle 217 formée à l'extrémité du filin de tirage 115 est par exemple attachée à l'intérieur du point de terminaison optique 500. Le tube prédécoupé 113 et le filin de tirage 115 sont par exemple protégés par le couvercle 507 une fois celui-ci refermé. Cela permet par exemple d'éviter d'endommager la chaussette de tirage 200 avant installation du point de terminaison optique 500 sur site.

La figure 6 est une vue en perspective, schématique et partielle, illustrant un exemple de point de branchement optique (PBO) 600, par exemple un point de branchement intermédiaire ou intérieur, comprenant la chaussette de tirage 100 selon un mode de réalisation.

Dans l'exemple représenté, le point de branchement optique 600 comprend :
- une embase 601 ;
- une bobine 603 montée à rotation par rapport à l'embase 601 et sur laquelle est enroulé un câble optique, par exemple le câble optique 101 ;
- une plaquette 605 de réception d'au moins un ensemble pré-connectorisé 607 ;
- un bouton 609 de blocage de la position angulaire de la bobine 603 par rapport à l'embase 601 ; et
- un couvercle 611, ou capot.

Dans l'exemple représenté, le tube prédécoupé 113 et le filin de tirage 115 de la chaussette de tirage 100 sont disposés à l'intérieur du point de branchement optique 600 avant pose et raccordement du câble optique 101. La boucle 117 formée à l'extrémité du filin de tirage 115 est par exemple attachée à l'intérieur du point de branchement optique 600. Le tube prédécoupé 113 et le filin de tirage 115 sont par exemple protégés par le couvercle 607 une fois celui-ci refermé. Cela permet par exemple d'éviter d'endommager la chaussette de tirage 100 avant installation du point de branchement optique 600 sur site.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le mode de réalisation des figures 2A et 2B, dans lequel le filin de tirage est un ensemble de fils d'armure rapportés, est adaptable par la personne du métier, à la lecture de la présente description, au cas du câble optique 101. Cela revient à utiliser l'ensemble de fils 211 rapportés et noués à ses deux extrémités 216 et 217, au lieu de l'ensemble de fils 111 issu de l'armure du câble optique 101.

Par ailleurs, ce qui est exposé plus particulièrement en relation avec un exemple d'application à des câbles optiques 101 et 201 s'applique plus généralement à tout type de câble de télécommunications.

Enfin, la mise en œuvre pratique des modes de réalisation et variantes décrits est à la portée de la personne du métier à partir des indications fonctionnelles données ci-dessus. En particulier, les modes de réalisation ne se limitent pas aux exemples de matériaux et de dimensions décrits. Par ailleurs, la longueur et la flexibilité du tube prédécoupé 113 sont adaptées au cheminement de tirage du câble optique 101 ou 201.

## Revendications

1. Chaussette de tirage (100 ; 200) pour câble de télécommunications (101 ; 201), comprenant :
- un tube prédécoupé (113) pour pelage ; et
- un filin de tirage (115).

2. Chaussette (100) selon la revendication 1, dans laquelle le filin de tirage (115) est constitué d'un ensemble de fils (111), de préférence en aramide, d'armure du câble de télécommunications (101).

3. Chaussette (200) selon la revendication 1, dans laquelle le filin de tirage (115) est constitué d'un ensemble de fils (211), de préférence en aramide, indépendants du câble de télécommunications (201).

4. Chaussette (100 ; 200) selon l'une quelconque des revendications 1 à 3, dans laquelle le tube prédécoupé (113) est un manchon de gaine thermorétractable.

5. Chaussette (100 ; 200) selon la revendication 4, dans laquelle le manchon de gaine thermorétractable (113) présente un coefficient de rétreint compris dans une plage allant de 2:1 à 6:1, de préférence dans une plage allant de 2:1 à 4:1, plus préférentiellement égal à environ 2:1 ou à 3:1.

6. Chaussette (100 ; 200) selon l'une quelconque des revendications 1 à 5, dans laquelle le tube prédécoupé (113) comprend au moins une ligne de prédécoupe (119) comprenant une pluralité de trous traversant chacun toute l'épaisseur du tube prédécoupé (113).

7. Chaussette (100 ; 200) selon l'une quelconque des revendications 1 à 6, dans laquelle le tube prédécoupé (113) présente une forme cylindrique de section circulaire.

8. Chaussette (100 ; 200) selon la revendication 7, dans sa dépendance à la revendication 6, dans laquelle chaque ligne de prédécoupe (119) s'étend le long d'une génératrice du cylindre formé par le tube prédécoupé (113).

9. Chaussette (100 ; 200) selon l'une quelconque des revendications 1 à 8, dans laquelle le tube prédécoupé (113) présente une longueur comprise entre environ 100 mm et environ 600 mm, par exemple égale à environ 500 mm.

10. Chaussette (100 ; 200) selon l'une quelconque des revendications 1 à 9, dans laquelle le tube prédécoupé (113) présente une résistance à la traction de l'ordre de plusieurs dizaines de newtons, de préférence comprise entre environ 80°N et environ 250 N.

11. Dispositif comprenant :
- un câble optique (101 ; 201) comprenant au moins une fibre optique (103) ; et
- une chaussette de tirage (100 ; 200) selon l'une quelconque des revendications 1 à 10, la chaussette de tirage (100 ; 200) étant située à une extrémité du câble optique (101 ; 201).

12. Dispositif selon la revendication 11 comprenant une chaussette de tirage (100) selon la revendication 2, dans lequel le câble optique (101) comprend plusieurs fibres optiques (103), la chaussette de tirage (100) enserrant des connecteurs (105) situés respectivement aux extrémités des fibres optiques (103), l'ensemble de fils d'armure (111) du câble (101) s'étendant hors d'une gaine (107) du câble optique (101) et ladite gaine (107).

13. Dispositif selon la revendication 11 comprenant une chaussette de tirage (200) selon la revendication 3, dans lequel le câble optique (201) comprend une seule fibre optique (103), la chaussette de tirage (200) enserrant un connecteur (205) situé à l'extrémité de la fibre optique (103) et l'ensemble de fils d'armure (211) situé en vis-à-vis du connecteur (205).

14. Point de branchement optique (600) comprenant :
- un dispositif selon la revendication 12 ;
- une embase (601) ;
- une bobine (603) d'enroulement du câble optique (101) montée à rotation par rapport à l'embase (601) ; et
- un couvercle de protection (611).

15. Point de terminaison optique (500) comprenant :
- un dispositif selon la revendication 13 ;
- une embase (501) ;
- une bobine (503) d'enroulement du câble optique (201) montée à rotation par rapport à l'embase (501) ; et
- un couvercle de protection (507).

16. Procédé de tirage d'un câble de télécommunications (101 ; 201) au moyen d'une chaussette de tirage (100 ; 200) selon l'une quelconque des revendications 1 à 10, le procédé comprenant les étapes suivantes :
a) insertion du tube prédécoupé (113) autour d'une extrémité du câble (101 ; 201) ;
b) fixation mécanique du tube prédécoupé (113) au câble (101 ; 201) ;
c) après tirage du câble (101 ; 201), retrait du tube prédécoupé (113) par pelage.

17. Procédé selon la revendication 16, dans lequel, à l'étape c), le retrait du tube prédécoupé (113) est réalisé manuellement, sans outil de découpe.
